# EUROPEAN PATENT APPLICATION

(11) **EP 1 884 701 A2**
(43) Date of publication of application: **06.02.2008**
(21) Application number: 07014553.7
(22) Date of filing: 25.07.2007
(51) Int. Cl.: F16L 3/22

(54) **A device for fixing and supporting tubes of mechanical systems of an automotive vehicle**

(30) Priority: 04.08.2006 BR PI0603174
(71) Applicant: A. RAYMOND ET CIE, 38000 Grenoble (FR)
(72) Inventor: Mazoni, Lucas, 13206-292 Jundiai SP (BR)
(74) Representative: Rüttgers, Joachim

(57) **Abstract**

One describes a device for fixing and supporting tubes of mechanical systems of an automotive vehicle, more specifically, tubes close to the vehicle chassis, which is provided with fixing means (9) for fixation to the chassis, a plurality of cavities (2, 3, 4, 5, 6) at its body contour, so as to provide a compact grouping of the tubes, the cavities comprising elastically deformable entrance walls (7), facilitating the fixation of these tubes, overcoming the drawbacks presented by the prior-art device. These drawbacks consisted in that the device used in the prior art occupied a larger physical space and the method of locking the tubes therein was difficult.

## Description

The present invention relates to a tube fixing and supporting device for tubes of mechanical systems of an automotive vehicle, which groups said tubes into a more compact arrangement, besides having a method of fitting the tubes into their cavities in a facilitated manner.

### Description of the prior art

As it is known, an automotive vehicle has numberless mechanical systems such as transmission, driving, air-cooling, suspension, brake, etc. systems, some of which are provided with tubing for transporting fluids.

An example of a mechanical system of an automotive vehicle provided with a tubing is the fuel-injection system, which is provided with one or more tubes that transport this fluid from the reservoir to the engine. These tubes are arranged in the lower region of the vehicle, close to the chassis through a fixing device, which bears and supports these tubes along their lengths. However, this same device is responsible for simultaneously fixing more than one type of mechanical-system tubes.

The device used presently fixes and supports up to five tubes, its body being provided with a contour similar to that of a parallelepiped, except for the fact of comprising a curved surface, instead of a straight one, on one of its faces of smaller areas. In addition, the device in question has its body elongated in its length and comprises through openings through its faces of larger area. These openings are substantially cylindrical and arranged side by side, so as to be parallel, contiguous and adjacent to each other, forming a span. The diameter of each opening is determined by the type of tubing to be housed inside it.

Further, these openings are arranged along the length of the device, wherein at the proximities of the end opposite the curved surface there is no opening, but rather a substantially cylindrical orifice having small grooves throughout its inner side surface, which has the objective of aiding in fixing it to the chassis. The symmetry axis of said orifice is orthogonal to the symmetry axis of the openings, and in its interior there is a pin welded to the vehicle chassis. In this way, the prior-art device is fixed to the vehicle through fitting between the orifice and the pin.

In addition, since there is a span on the device body, the body portion that contains the openings is divided into two parts: a first upper part fixed to the body; and a second lower part movable angularly with respect to the first one at the point of intersection between the first and the second parts, more specifically, at the intersection between the curved face of smaller area and an opening arranged close to this face.

At the ends of the first and second parts opposite the point of angular movement, there is a region that effects the fitting between these two parts, and in the first upper part this fitting region is provided with small walls and grooves, the shapes of which are geometrically complementary to the projections, cavities and protrusions provides on the second part, so that this complementary geometry permits these two parts to fit into each other, locking the device.

Thus, in order for the mechanical system to be installed close to the chassis, there is a need to fix more than one of these devices to the automotive vehicle by fitting the pin into the orifice. After this fitting step, each tube is adjusted inside its respective openings, while the devices remain open, that is to say, with the first part angularly away with respect to the second part. After the tubes have been housed in their respective openings, the locking of the device takes place, the tubes being housed inside them, so that the tubes will be secured close to the chassis.

Usually, the prior-art device is designed for supporting, in its openings, a degassing tube or fuel vapor, two brake tubes and two fuel transport tubes, wherein, when fixed to the vehicle, they are arranged side by side depending on the geometry of the span formed by the openings.

However, this device has little handiness in the procedure of inserting the tubes inside it and in the procedure of engagement and disengagement between the first and second parts, that is to say, the removal of the tubes from the opening is difficult due to the force necessary to unlock the tube (disengage first part from second part), which may be very disadvantageous and little practical when, for instance, one wishes to remove the tubes from their positions after they have been duly inserted into the openings for purposes of maintenance or exchange of one or more tubes. Moreover, if it is necessary to withdraw only one tube from the device openings, there is the risk that the other tubes will be disaligned due to the unlocking and opening of the devices, enhancing the lack of handiness of this prior-art device.

Besides, the prior-art device has another disadvantage resulting from the great force necessary for effecting the disengagement: the possibility of the pin inserted into the device being damaged due to the fact that it is located, when fitted into the orifice, at the ends of one of the ends of the device body, that is to say, the point at which this device is fixed close to the chassis is away from the arrangement of the tubes, when inserted into the openings, so that a moment of forces is generated.

Besides the complex locking and the distance of the point of fixation to the chassis of the tubes, which create a lever, the prior-art device occupies a large physical space, since, due to their shape, the tubes are arranged along a line side by side, being thus distributed over a large area. In addition, since this device has a large volume, it generates higher production costs.

### Objectives of the invention

Therefore, it is an objective of this invention to provide a supporting and fixing device having means that bring about an easy and practical fitting of the tubes.

A second objective of this invention is to provide a supporting and fixing device that has an orifice for fitting the chassis pin at a location that distributes better the force exerted for its removal, so as to prevent damages to the pin.

It is another objective of this invention to provide a supporting and fixing device that has a reduced volume with respect to the prior-art device, so that it will also occupy less physical space and distribute the tubes in a compact manner, not along a line.

### Brief description of the invention

The objectives of the present invention are achieved by means of a device for fixing and supporting tubes of mechanical systems of an automotive vehicle on the vehicle chassis, the device comprising a body having a fixing means, the device further comprising a plurality of cavities, the cavities having elastically deformable walls for fitting and fixing the tubes into the cavities; the cavities being arranged at the body contour, so that at least one cavity substantially overlaps some of the other cavities.

### Brief description of the drawings

The present invention will now be described in greater detail with reference to an embodiment represented in the drawings. The figures show:

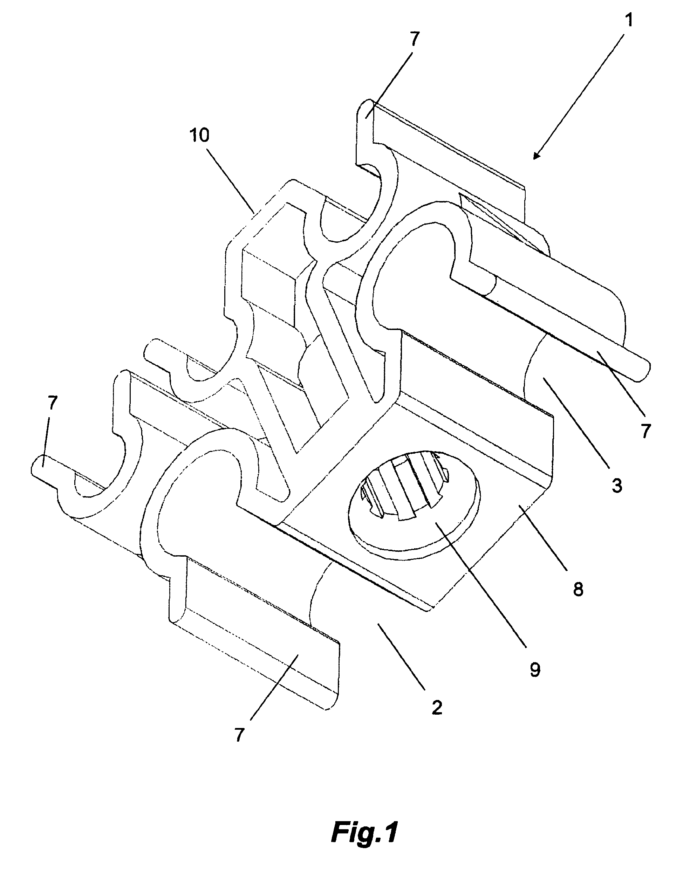

- Figure 1 is a first perspective view of the fixing and supporting device of the present invention;

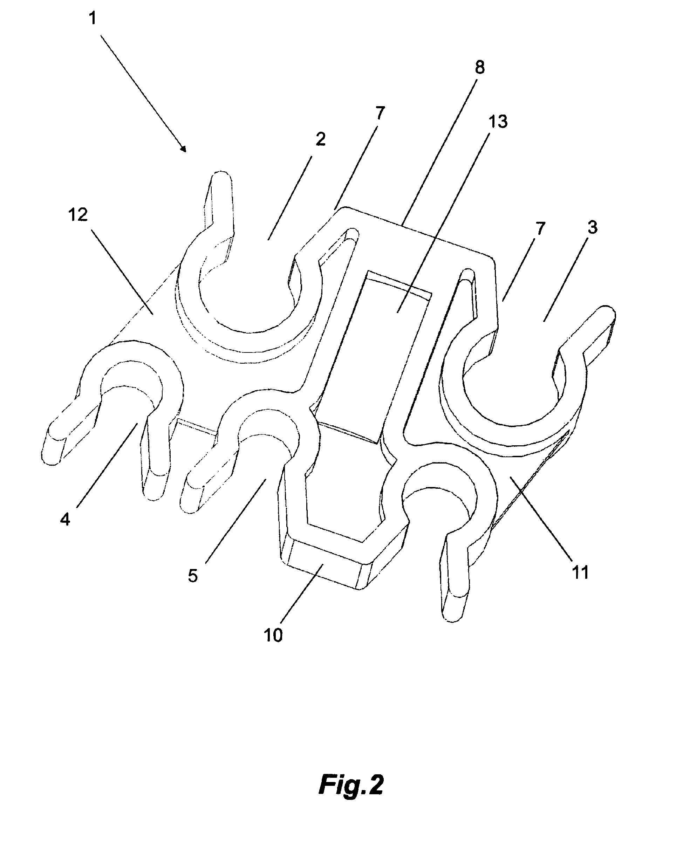

- Figure 2 is a second perspective view of the fixing and supporting device of the present invention; and

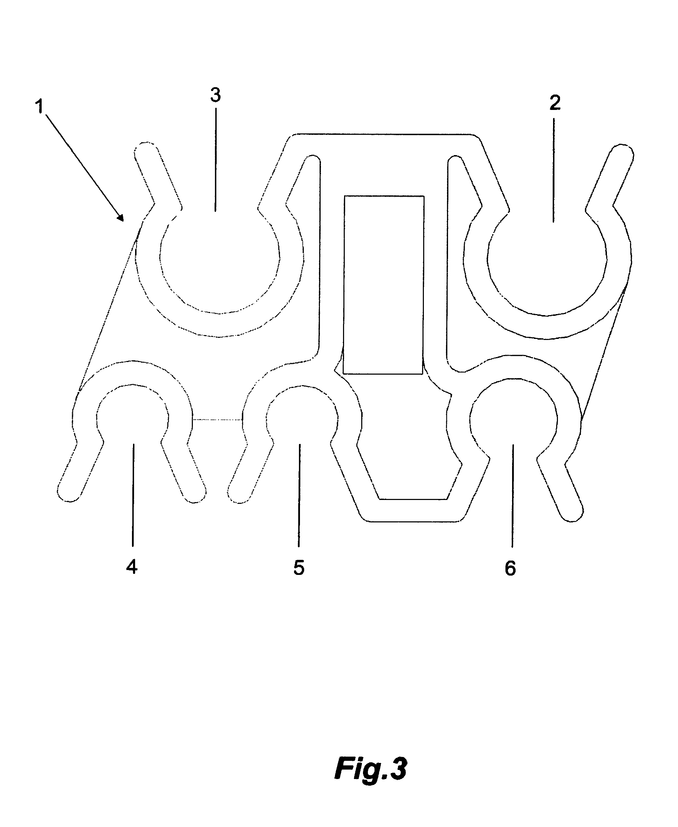

- Figure 3 is a plane view of the device of the present invention.

### Detailed description of the figures

The device 1 for aligning and supporting tubes of mechanical systems of an automotive vehicle of the present invention comprises a body provided with fixing means 9 for fixation to the chassis and a plurality of cavities 2, 3, 4, 5, 6, for fixing the tubes of the mechanical system, the cavities 2, 3, 4, 5, 6 having elastically deformable entrance walls 7 for fitting and fixing the tubes to inside them.

The fixing means 9 comprises preferably a substantially cylindrical orifice, the inner side surface of which is provided with grooves, a pin welded close to the lower portion of the chassis being arranged inside this orifice. By prefer ence, this orifice 9 projects into the device body 1 from a upper flat surface 8, which is located between a first and a second cavities 2, 3, that is to say, the means for fixation to the chassis of the automotive vehicle are arranged between the first and the second cavities 2, 3.

More specifically, the upper flat surface 8, which has a substantially rectangular shape, is associated to the first and second cavities 2, 3 in a continuous and integral manner through the entrance walls 7 of these cavities, that it so say, the first and second cavities 2, 3 are substantially parallel and with their entrance walls 7 facing the body side that contains the fixing means 9. Further, these cavities 2, 3 are arranged on opposite sides of the upper flat surface 8, so as to project downwards from the limit of the area of the flat surface 8.

The cavities 4, 5, 6 are also provided with entrance walls 7, which has the objective of facilitating the fitting and fixing of the tubes into said cavities 2, 3,4,5, 6.

In a more specific manner, the cavities 2, 3, 4, 5, 6 are substantially U-shaped, preferably provided with two ends (entrance walls 7) having inclination diverging from each other, so that project out of the body of cavities 2, 3, 4, 5, 6. In this regard, the first, second, fourth and fifth cavities 2, 3, 5, 6 have one of their ends, or entrance wall 7, elastically deformable, since they are adjacent the lower 10 or upper 8 flat surface. Only the third cavity 4 has its two entrance walls 7, or two elastically deformable ends. Thus, in sort, one can say that the cavities 2, 3, 4, 5, 6 are shaped by a cylindrical body and by diverging ends.

From the outer portion of the cylindrical body of the first and second cavities 2, 3 two structural connections 11, 12 project, the first structural connection 11 being associated, at one of its ends, to the first cavity 2 and, at its other end, to the cavity 6. The second structural connection 12, in tum, is associated, at one of its ends, to the second cavity 3, and, at its other end, to the third cavity 4.

These structural connections 11, 12 have the function of uniting the device body 1 of the present invention, effecting the filling of the device body in these portions "between cavities", besides the connection between the first and second cavities 2, 3, located in the upper portion, and the third and fifth cavities 4, 6 located in the lower portion. In this way, the fifth cavity 6 is arranged substantially in a vertical position opposite the first cavity 2 close to the side of the device, and in the same way the third cavity 4 is arranged substantially in a vertical position opposite the second cavity 3.

The fifth cavity 6 and the fourth cavity 5 are associated through their respective entrance walls 7 to an and of the width of an upper flat surface 10 that is substantially rectangular in shape, the fourth cavity 5 being further adjacent the lower portion of the second structural connection 12.

The lower flat surface 10, as well as the upper flat surface 8, has its length equivalent to the longitudinal length of the cavities and, consequently, to the thickness of the device body, except for the thickness of the structural connections 11, 12, which is reduced with respect to the rest of the device.

In addition, this device has, as part of its structural body, a trunk region 13 arranged between the upper 8 and the lower 10 flat regions and between the structural regions 11, 12, located substantially in the central portion of the device 1.

The cavities 2, 3, 4, 5, 6 are arranged at the contour of the device body 1, in such a way that at least one cavity substantially overlaps some of the other cavities. Preferably, the lower portion of the device of the present invention has three cavities 4, 5, 6 of smaller diameter with respect to the two cavities 2, 3 arranged in the upper portion. This means that the fist and second cavities 2, 3 substantially overlaps the third, fourth and firth cavities 4, 5, 6.

According to the invention, the entrance walls of the third, fourth and fifth cavities 4, 5, 6 are opposed to the entrance walls of the first and second cavities 2, 3. Within the scope of the invention, the entrance walls of the third , fourth and fifth cavities 4, 5, 6 might also face the same side of the entrance walls of the first and second cavities 2, 3. Further, one of the possible alternative embodiments for the device 1 of the present invention would be to arrange at least one cavity of on one of the sides of the device 1.

Thus, from this arrangement of the cavities 2, 3, 4, 5, 6 around the device body 1, one obtains a reduction in the physical space occupied by the cables, since the grouping occurs around the body, not along a side line, as is the case of the prior art.

In addition, coupled to the location of the cavities 2, 3, 4, 5, 6, the location of the fixing means in the upper central portion of the device 1 aids in fixing the cables in a more compact arrangement.

The method of fitting the tubing into the cavities 2, 3, 4, 5, 6 presented by the device 1 of the present invention is facilitated, since the entrance walls 7, being convergent and elastically deformable, facilitate the entry of the tubes into them, without the need to effecting any locking or unlocking. Further, since each tube has its corresponding cavity independent from the other cavities as far as the locking and the fitting are concerned, the drawbacks of the prior art are overcome, facilitating the removal of these tubes, because, when one tube is removed, there will be no interference in the position and in the fitting of the other tubes.

Thus, if it is necessary to make some repair that involves the fitting of these tubes, it will be expressively less difficult, since the force necessary to remove these tubes is much smaller with respect to the prior-art device.

Preferably the first and second cavities 2, 3 receive a respective fuel transport tube, while the third and fourth cavities receive a respective tubing of the brake system, and the fifth cavity 6 receives a fuel vapor tube.

A preferred embodiment having been described, one should understand that the scope of the present invention embraces other possible variations, being limited only by the contents of the accompanying claims, which include the possible equivalents.

## Claims

1. A device for fixing and supporting tubes of mechanical systems of an automotive vehicle on the chassis of a vehicle (1), the device comprising a body provided with a fixing means (9) for fixation to the chassis, the device being **characterized by** comprising:
- a plurality of cavities (2, 3, 4, 5, 6);
- the cavities (2, 3, 4, 5, 6) being provided with elastically deformable entrance walls (7) for fitting and fixing the tubes into the cavities (2, 3, 4, 5, 6);
- the cavities (2, 3, 4, 5, 6) being arranged at the body contour, so that at least one cavity substantially overlaps some of the other cavities.

2. A device according to claim 1, **characterized by** comprising a first cavity (2) and a second cavity (3) substantially parallel and with their entrance walls facing the body side that contains the fixing means (9).

3. A device according to claim 2, **characterized by** comprising a third cavity (4), a fourth cavity (5) and a fifth cavity (6), the first and second cavities (2, 3) substantially overlapping the third, fourth and fifth cavities (4, 5, 6), the entrance walls of the third, fourth can fifth cavities (4, 5, 6) being opposite the entrance walls of the first and second cavities (2, 3).

4. A device according to claim 2, **characterized in that** the fixing means (9) for fixation to the chassis of the automotive vehicle is arranged between the first and second cavities (2, 3).

5. A device according to claim 4, **characterized in that** the fixing means (9) of the body is a female element, cooperating with a male fixing device provided on the vehicle chassis.
